## Europäisches Patentamt
## European Patent Office
## Office européen des brevets

(11) Veröffentlichungsnummer: **0 242 764**
**A2**

(19)

(12) # EUROPÄISCHE PATENTANMELDUNG

(21) Anmeldenummer: **87105454.0**

(51) Int. Cl.⁴: **G06F 15/16**

(22) Anmeldetag: **13.04.87**

(30) Priorität: **14.04.86 DD 289048**

(43) Veröffentlichungstag der Anmeldung:
**28.10.87 Patentblatt 87/44**

(84) Benannte Vertragsstaaten:
**AT BE CH DE FR GB IT LI NL**

(71) Anmelder: **VEB Elektroprojekt und Anlagenbau Berlin**
**Rhinstrasse 100**
**DDR-1140 Berlin(DD)**

(72) Erfinder: **Gibas, Peter, Dr.**
**Schirmerstrasse 1**
**DDR-7050 Leipzig(DD)**
Erfinder: **Kriesel, Werner, Prof.Dr.sc.phil.**
**Rödelstrasse 5**
**DDR-7031 Leipzig(DD)**
Erfinder: **Hollnagel, Rainer**
**Wartburgstrasse 21**
**DDR-9023 Karl-Marx-Stadt(DD)**
Erfinder: **Kozub, Christoph**
**Karl-Liebknecht-Strasse 12**
**DDR-7113 Markkleeberg(DD)**
Erfinder: **Blanke, Wolfgang**
**Kurt-Tucholsky-Strasse 8/1004**
**DDR-7030 Leipzig(DD)**
Erfinder: **Hess, Frank**
**Altenhainer Strasse 5 a**
**DDR-9023 Karl-Marx-Stadt(DD)**
Erfinder: **Rohbeck, Volker**
**Sachsenstrasse 9**
**DDR-7050 Leipzig(DD)**
Erfinder: **Burkhardt, Ralf**
**Manetstrasse 2**
**DDR-7010 Leipzig(DD)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) Verfahren und Vorrichtung zur dezentralen Übertragung der Masterfunktion in Mehrrechnersystemen mit ringförmigem Übertragungskanal.

(57) Bei diesem Verfahren bzw. dieser Vorrichtung sind mehrere Teilnehmerstationen (100, 200, 300, 400) über einen unidirektionalen Übertragungskanal (1) seriell miteinander verbunden und bestehen jeweils aus einer Empfangseinrichtung (2), einer Sendeeinrichtung (3), einer zwischen diesen an-geordneten Schalteinrichtung (4), einer Informations-verarbeitungseinheit (6) sowie aus einer Steuerein-heit (5) zur Zugriffssteuerung auf den Übertragungskanal (1). Jeweils eine Teilnehmersta-tion hat zu einer Zeit die Masterfunktion.

Um zusätzliche Verzögerungen zwischen der Erfassung und Aussendung von Steuersignalen zum Übertragen der Masterfunktion in sendewilligen Teilnehmerstationen zu vermeiden, die bezüglich der Übertragung der Masterfunktion und anderer Funktionen gleichrangig sind und dezentral arbeiten, wobei Empfang und Wiederaussendung der Steuersignale durch die sendewilligen Teilnehmer gleichzeitig erfolgt, werden drei verschiedene Steuersignale verwendet, wobei das erste zur Unterbrechung des Übertragungskanals und zur Herstellung von Punkt-zu-Punkt-Verbindungen zwischen den sendewilligen Teilnehmern und der aktuellen Masterstation führt, das zweite die Masterfunktion auf den in Senderichtung nächstfolgenden sendewilligen Teilnehmer überträgt und das dritte die Wiederherstellung der ringförmigen Übertragungsstrecke veranlaßt.

Fig 1

## Verfahren und Vorrichtung zur dezentralen Übertragung der Masterfunktion in Mehrrechnersystemen mit ringförmigem Übertragungskanal

Die Erfindung betrifft ein Verfahren sowie eine Vorichtung zur Übertragung der Masterfunktion in Mehrrechnersystemen · mit ringförmigem Übertragungskanal, in denen

Teilnehmerstationen über einen unidirektionalen Übertragungskanal seriell miteinander verbunden sind und jeweils eine Empfangs-und eine Sendeeinrichtung sowie eine zwischen Empfangs-und Sendeeinrichtung im Wege des Übertragungskanals angeordnete den Übertragungskanal unterbrechende und schließende Schalteinrichtung aufweisen, der Übertragungskanal während der Nutzdatenübertragung nur die Schalteinrichtungen der jeweils aktuellen Masterstation unterbricht,

alle anderen Teilnehmerstationen während der Datenübertragung die empfangenen Signale sofort auf ihre Sendeeinrichtungen durchschalten und

die Übertragung der Masterfunktion durch von der jeweils aktuellen Masterstation gesendete Steuersignale veranlaßt wird.

Zur Datenübertragung zwischen Systemkomponenten eines Mehrrechnersystems für die Prozeßdatenverarbeitung, die Prozeß-und Laborautomatisierung, die Bürokommunikation u.a. sind parallele und serielle Übertragungsverfahren bekannt. In hierarchisch aufgebauten, räumlich verteilten dezentralisierten Systemen werden aus Gründen der Datensicherung, der Flexibilität und um möglichst kurze Übertragungswege zu ermöglichen vorrangig serielle Übertragungssysteme verwendet.

Je nach Art der Zugriffssteuerung der Teilnehmerstationen auf einen seriellen Übertragungskanal werden die kontrollierte Zuteilung und zufällige Zuteilung, nach dem Ort der Zuteilung die zentrale und die dezentrale Zuteilung, nach dem Anforderungszeitraster die feste und die freie Zuteilung und nach den Auswahlregeln für die nächste Zuteilung die statische Prioritätsverfahren, die faire Zuteilung und die sequentielle Zuteilung unterschieden. Insbesondere für Prozeßautomatisierungssysteme mit hierarchisch gegliederten intelligenten Teilnehmerstationen, die Nachrichten auch untereinander austauschen müssen und dabei eine streng definierte Reaktionszeit auf Alarme und Meldungen einhalten müssen, kommen deshalb nur Verfahren mit dezentraler Zuteilung und möglichst freiem Anforderungszeitraster in Frage.

Als einfachste, redundante topologische Struktur mit Fehlertoleranzeigenschaften ist für die Verbindung mehrerer Teilnehmer die Ring-bzw. die Mehrfachringstruktur bekannt (s. u.a. US-PS 4 486 852, US-PS 4 495 617, US-PS 4 501 021, DE-OS 3 150 474, DE-OS 3 012 105 und DD-PS 225 293 sowie Heger/Steusloff/Syrbe: Echtzeitrechnersystem mit verteilten Mikroprozessoren, Fraunhofer-Institut für Informations-und Datenverarbeitung, Karlsruhe 1979 und Färber: rtp-Seminar Bussysteme, R. Oldenbourg-Verlag, München/Wien 1984).

Typische dezentral gesteuerte Zugriffsverfahren sind dabei u.a. die Slot-Verfahren, bei denen auf dem Ring Abschnitte zirkulieren, in die vom Sender Nachrichten eingeschrieben werden, die vom Empfänger wieder gelöscht werden und der Registereinfügungsring, bei dem eine sendewillige Station ein Nachrichtentelegramm zwischen zwei auf dem Ring befindliche Telegramme einfügt, wobei sie das nachfolgende Telegramm zwischenspeichert und erst nach ihrem eigenen sendet. Nachteilig ist die wenig ·flexible Reaktion auf unterschiedliche und wechselnde Belastungsfälle beim Slot-Verfahren in bezug auf den Nachrichtenanfall der Stationen, da ein großer Teil der Kanalkapazität durch leere Slots gebunden sein kann und der. hohe Aufwand für die Zwischenspeicherung und Sicherung gegen Ausfälle beim Registereinfügungsring. Ein weiteres typisches dezentral gesteuertes Zugriffsverfah ren ist das Kennzeichen-Verfahren (Token - passing), bei dem mittels einer speziellen Nachricht, dem sogenannten Token, die Sendeberechtigung von einer Teilnehmerstation an die nächste übergeben wird und dieser dann das Senderecht wahrnimmt oder das Token weitergibt. Jede sendewillige Teilnehmerstation muß dabei auf das Token warten, dieses nach dessen Erkennung vom Ring nehmen und nach dem Übermitteln seines Datentelegrammes das Token erneut aussenden. Vorteile des Kennzeichen-Verfahrens sind dessen Einfachheit, die dezentrale Zugriffssteuerung und die Unabhängigkeit von der Nachrichtenlänge. Nachteilig ist die mit der Erkennung des Token verbundene notwendige Zwischenspeicherung in jeder Teilnehmerstation, wodurch die Übertragungsleistung des Übertragungskanals reduziert wird.

In der EP-Schrift 0 054 077 und fortgeschrittener in der DE-OS 3 413 473 werden Lösungen offenbart, die das Kennzeichen-Verfahren weiter ausgestalten und insbesondere Vorteile hinsichtlich eines höheren Übertragungswirkungsgrades aufweisen. In der DE- ·

3

OS 3 413 473 wird das dadurch erreicht, daß das Kennzeichen aus zwei verschiedenen Zeichen, einem Freizeichen und einem Belegtzeichen, besteht, wobei eine das Senderecht wahrnehmende Teilnehmerstation das Freizeichen nach seiner Erfassung in das Belegtzeichen umwandelt und dieses vor den Nutzdaten aussendet. Dabei entsteht in jeder Teilnehmerstation zwischen Erfassung und Aussendung der Steuersignale eine Verzögerung, die durch die Bit-Stellen bestimmt wird, in denen sich die beiden Signale voneinander unterscheiden. Ein weiterer Nachteil ist die Konzentration bestimmter Funktionen in einer besonders ausgezeichneten Monitorstation, wodurch die Zuverlässigkeit des gesamten Übertragungsrings wesentlich vom Ausfallverhalten der Monitorstation abhängig ist. Während bei Ausfall einer beliebigen gleichartigen Teilnehmerstation, beispielsweise durch einfaches Überbrücken, der Ring noch funktionsfähig ist, ist bei Ausfall der Monitorstation meist keine Kommunikation auf dem Ring mehr möglich.

Hier will die Erfindung Abhilfe schaffen. Aufgabe der Erfindung ist, ein Verfahren und eine Vorrichtung zur dezentral gesteuerten Übertragung der Masterfunktion in dezentralen Mehrrechnersystemen mit ringförmigem Übertragungskanal zu - schaffen. Jede Teilnehmerstation im ringförmigen Übertragungskanal soll völlig gleichberechtigt sein und keine Monitorstation existieren. Bei dem zwischen der Erfassung und Aussendung der zur Übertragung der Masterfunktion nötigen Steuersignale soll in den sendewilligen Teilnehmerstationen keine zusätzliche Verzögerung entstehen,und alle Teilnehmerstationen sollen bezüglich der Steuerung des Mastertransfers völlig gleichartig aufgebaut sein und gleiche Funktionen erfüllen. Ferner soll keine Zwischenspeicherung der den Mastertransfer veranlassen den Steuersignale in den sendewilligen Teilnehmern erforderlich sein, und Empfang und die Aussendung von Steuersignalen im wesentlichen gleichzeitig erfolgen.

Zur Lösung der obigen Aufgabe ist das erfindungsgemäße Verfahren zur Übertragung der Masterfunktion in dezentralen Mehrrechnersystemen mit ringförmigem Übertragungskanal, in denen

Teilnehmerstationen über einen unidirektionalen Übertragungskanal seriell miteinander verbunden sind und jeweils eine Empfangs-und eine Sendeeinrichtung sowie eine zwischen Empfangs-und Sendeeinrichtung im Wege des Übertragungskanals angeordnete den Übertragungskanal unterbrechende und - schließende Schalteinrichtung aufweisen, der Übertragungskanal während der Nutzdatenübertragung nur die Schalteinrichtungen der jeweils aktuellen Masterstation unterbricht, alle anderen Teilnehmerstationen während der Datenübertragung die empfangenen Signale sofort auf ihre Sendeeinrichtungen durchschalten und

die Übertragung der Masterfunktion durch von der jeweils aktuellen Masterstation gesendete Steuersignale veranlaßt wird, dadurch gekennzeichnet, daß zur Übertragung der Masterfunktion drei verschiedene Steuersignale verwendet werden, ein erstes Steuersignal von der jeweils aktuellen Masterstation unmittelbar nach einem von dieser gesendeten Datentelegramm gesendet wird, alle Teilnehmerstationen mit Sendewunsch nach Empfang des ersten Steuersignals den Übertragungskanal durch Öffnen ihrer Schalteinrichtung unterbrechen, mit einem von der aktuellen Masterstation nach dem ersten Steuersignal ausgesendeten zweiten Steuersignal die Masterfunktion auf die in Senderichtung nächstfolgende sendewillige Teilnehmerstation übertragen wird, das dritte Steuersignal von allen sendewilligen Teilnehmerstationen nach Empfang des ersten Steuersignales gesendet wird und alle Teilnehmerstationen, die das dritte Steuersignal empfangen, ihre Schalteinrichtung schließen.

Im folgenden werden die vorgeschlagenen erfindungsgemäßen Verfahrensschritte näher erläutert:
Während der Nutzdatenübertragung durch den jeweils aktuellen Master sind die Schalteinrichtungen aller anderen Teilnehmer geschlossen. Der ringförmige Übertragungskanal beginnt somit im Sender und endet im Empfänger des aktuellen Masters, wobei alle anderen Teilnehmer die empfangenen Informationen ohne Zwischenspeicherung sofort auf ihren Sender durchschalten und selbst nur Slaves sind. Das vom aktuellen Master nach dessen Datentelegramm auf den Übertragungskanal gesendete erste Steuersignal wird in gleicher Weise übertragen wie die vorangegangenen Nutzdaten, weshalb durch geeignete Bit-Kombination verhindert werden muß, daß das erste Steuersignal in den Nutzdaten auftritt.

Der Empfang des ersten Steuersignals führt zur Unterbrechung des Übertragungskanals in allen Teilnehmern mit Sendewunsch, so daß während der folgenden Steuerphase der Übertragungskanal aus einer Anzahl von Punkt-zu-Punkt-Verbindungen zwischen den Teilnehmern mit Sendewunsch und dem aktuellen Master strukturiert ist, wobei alle Teilnehmer ohne Sendewunsch im oben beschriebenen Zustand verbleiben.

Während des Bestehens der Punkt-zu-Punkt-Verbindungen zwischen den Teilnehmern mit geöffneter Schalteinrichtung werden im wesentlichen gleichzeitig zweite und dritte Steuersignale auf den Übertragungskanal gesendet, wobei nur der aktuelle Master zweite und alle Teilnehmer mit Sendewunsch jeweils ein drittes Steuersignal abgeben. Dabei wird mittels des zweiten Steuersignals, welches nur den in Senderichtung unmittelbar folgenden sendewilligen Teilnehmer erreicht, die Masterfunktion auf diesen Teilnehmer übertragen, während alle anderen sendewilligen Teilnehmer und der aktuelle Master ein drittes Steuersignal empfangen und zum Schließen ihrer Schalteinrichtungen veranlaßt werden, wodurch der Übertragungskanal wieder die Ausgangsstruktur annimmt, das heißt, im nunmehr neuen aktuellen Master beginnt und endet.

Die beschriebenen Verfahrensschritte wiederholen sich nach jeder Nutzdatenaussendung unabhängig von deren Länge, wodurch die Masterfunktion im ringförmig strukturierten Mehrrechnersystem ständig in Senderichtung umläuft, und nur die Rechner mit aktuellem Sendewunsch in die Steuerung des Mastertransfers einbezogen sind.

Bei Ringsystemen mit sehr kleiner Ringumlaufzeit darf die Zeitdauer des zweiten Steuersignales nicht größer gewählt werden als die Zeitdauer des dritten Steuersignales, um ein Schließen der Schalteinrichtung des aktuellen Masters vor der vollständigen Aussendung des zweiten Steuersignales und damit vor der Übertragung der Masterfunktion auf den nächsten sendewilligen Teilnehmer zu vermeiden.

Die infolge der strukturbedingten endlichen Ringumlaufzeit entstehende Zeitdifferenz zwischen dem Ende der Aussendung des zweiten Steuersignales und dem Wiederempfang des zweiten bzw. dritten Steuersignales durch den aktuellen Master wird dadurch überbrückt, daß der Master das zweite Steuersignal ständig wiederholt, während die ersten beiden bzw. das erste und dritte Steuersignal auf dem Übertragungsring zirkulieren.

Wenn auf dem Übertragungsring keine sendewillige Teilnehmerstation vorhanden ist, empfängt die aktuelle Masterstation das von ihr ausgesendete erste und zweite Steuersignal selbst wieder, wodurch sie aktuelle Masterstation bleibt und, wenn zwischenzeitlich kein erneuter eigener Sendewunsch zu verzeichnen ist, die Aussendung des ersten und zweiten Steuersignales wiederholt. Die Zeit zwischen zwei aufeinanderfolgenden Aussendungen der ersten beiden Steuersignale muß dabei größer oder gleich der Summe aller Laufzeiten auf dem Übertragungsring und der zeitlichen Länge der beiden Signale gewählt werden, um Fehlersituationen zu verhindern, die durch das gleichzeitige Vorhandensein mehrerer erster und zweiter Steuersignale auf dem Übertragungsring entstehen könnten.

Es ist zweckmäßig, die Bit-Muster für das zweite und für das dritte Steuersignal so zu wählen, daß sich die beiden Signale in der ersten Bit-Stelle voneinander unterscheiden, wodurch die

Teilnehmer bereits durch den Empfang dieses Bits eine Information über ihren konkreten Zustand (Master oder Slave) während des nächsten Datentransfers erhalten.

Die die obige Aufgabe lösende Vorrichtung zur Durchführung des Verfahrens weist eine Informationsverarbeitungseinheit sowie eine Steuereinheit zur Zugriffssteuerung auf den Übertragungskanal auf und

ist dadurch gekennzeichnet, daß

die Empfangseinrichtung mit einem Demodulator verbunden ist, der einen Nutzdatenausgang und einen ersten, zweiten und dritten Steuersignalausgang aufweist, von denen der Nutzdatenausgang mit der Informationsverarbeitungseinheit, der erste Steuersignalausgang mit einem ersten Eingang einer ersten Torschaltung,

der zweite Steuersignalausgang mit einem ersten Eingang einer zweiten Torschaltung und

der dritte Steuersignalausgang mit einem Signaleingang zum Schließen der Schalteinrichtung und mit einem ersten Stop-Eingang eines Steuersignalgebers für das erste und zweite Steuersignal verbunden sind,

ein Sendewunsch-Signalausgang der Informationsverarbeitungseinheit an einen zweiten Eingang der ersten Torschaltung und an einen zweiten Eingang der zweiten Torschaltung angeschlossen ist,

ein Ausgang der ersten Torschaltung mit einem Signaleingang zum Öffnen der Schalteinrichtung und mit einem Starteingang eines Steuersignalgebers für das dritte Steuersignal verbunden ist, welcher an einem ersten Eingang der Sendeeinrichtung liegt,

ein zweiter Eingang der Sendeeinrichtung mit einem seriellen Nutzdatenausgang der Informationsverarbeitungseinheit und ein dritter Eingang der Sendeeinrichtung mit einem Ausgang des Steuersignalgebers für das erste und zweite Steuersignal verbunden sind, und ein Starteingang des Steuersignalgebers für das erste und zweite Steuersignal an einen Ausgang der Informationsverarbeitungseinheit zur Ende-Signalisierung der Nutzdatenübertragung angeschlossen ist und

ein Ausgang der zweiten Torschaltung mit einem zweiten Stop-Eingang des Steuersignalgebers für das erste und zweite Steuersignal und mit einem Eingang der Informationsverarbeitungseinheit zur Signalisierung des Beginns der Nutzdatenübertragung verbunden ist.

Zweckmäßigerweise besteht der Demodulator aus einem Nutzdatendemodulator und aus drei parallel angeordneten Komparatoren, deren Ausgänge jeweils der Nutzdatenausgang und der erste, zweite und dritte Steuersignalausgang sind.

Die beiden Stop-Eingänge des Steuersignalgebers für das erste und zweite Steuersignal sind über eine Oder-Schaltung miteinander verknüpft; die Stop-Eingänge des Signalgebers für das zweite Steuersignal liegen parallel am Ausgang der Oder-Schaltung; der Ausgang der Informationsverarbeitungseinheit ist zur Ende-Signalisierung der Nutzdatenübertragung mit dem Start-Eingang des Steuersignalgebers für das erste Steuersignal und mit dem zweiten Stop-Eingang des Steuersignalgebers für das zweite Steuersignal verbunden; die beiden Ausgänge der Steuersignalgeber für das erste und das zweite Steuersignal sind zur Ende-Signalisierung der Steuersignalaussendung am Start-Eingang des Steuersignalgebers für das zweite Steuersignal angeschlossen; und der Starteingang des Steuersignalgebers für das erste Steuersignal ist außerdem mit einer Steuersignal-Wiederholschaltung verbunden.

Vorteilhafterweise besteht die Steuersignal-Wiederholschaltung aus einer dritten Torschaltung mit drei Eingängen und aus einem Zeitglied, wobei der Steuersignalausgang des Demodulators für das erste Steuersignal über das Zeitglied mit dem ersten Eingang der Torschaltung, der Steuersignalausgang des Demodulators für das zweite Steuersignal mit dem zweiten Eingang der Torschaltung und ein Rückmeldeausgang der Schalteinrichtung mit dem dritten Eingang der Torschaltung verbunden sind.

Vorteilhafterweise ist am ersten Steuersignalausgang des Demodulators ein Zeitglied angeschlossen, dessen Ausgang an einem dritten Eingang der zweiten Torschaltung und an einem zweiten Eingang einer vierten Torschaltung liegt, die vor dem Signaleingang zum Schließen der Schalteinrichtung angeordnet ist.

Die Funktionsweise der Schaltungsanordnung entspricht dem Verfahren.

Wenn die Empfangseinrichtung das erste Steuersignal aufnimmt, welches gleichzeitig auch über die geschlossene Schalteinrichtung und die Sendeeinrichtung auf dem Ring weiterläuft, wird über die Komparatorschaltung für das erste Steuersignal und über die erste Torschaltung die Schalteinrichtung dann geöffnet, wenn an der ersten Torschaltung bereits ein internes Sendewunsch-Signal von der Informationsverarbeitungseinheit anliegt. Anschließend wird vom Signalgeber für das dritte Steuersignal durch dessen Aktivierung über die Sendeeinrichtung ein drittes Steuersignal an den nächsten Teilnehmer mit geöffneter Schalteinrichtung gesendet, der seinerseits nach dessen Erkennung mittels der dritten Komparatorschaltung seine Schalteinrichtung schließt.

Zeitgleich mit dem Aussenden des dritten Steuersignals wird von der Empfangseinrichtung entweder gleichfalls ein drittes Steuersignal empfangen, was zum Schließen der Schalteinrichtung führt, oder ein zweites Steuersignal aufgenommen, welches über die Komparatorschaltung zur Ansteuerung der zweiten Torschaltung führt. An der zweiten Torschaltung entsteht ein Ausgangssignal, wenn gleichzeitig ein Sendewunsch vorliegt. Das Ausgangssignal der zweiten Torschaltung signalisiert der Informationsverarbeitungseinheit die Übernahme der Masterfunktion und bewirkt das Starten der Nutzdatenübertragung.

Im Anschluß an die Nutzdatenübertragung wird von der Informationsverarbeitungseinheit der Steuersignalgeber für das erste und zweite Steuersignal gestartet, wodurch die Aussendung eines ersten und mehrerer zweiter Steuersignale solange erfolgt, bis entweder ein drittes Steuersignal empfangen wird, oder nach Aufnahme eines zweiten Steuersignales das Senderecht selbst erneut wahrgenommen wird. Die Anzahl der dem ersten Steuersignal folgenden zweiten Steuersignale ist, wie bei der Darlegung des Wesens des erfindungsgemäßen Verfahrens bereits beschrieben, abhängig von der Ringumlaufzeit.

Wenn auf dem Ring kein sendewilliger Teilnehmer vorhanden ist, wird vom aktuellen Master mittels der Steuersignal-Wiederholschaltung die Aussendung des ersten und der zweiten Steuersignale nach einer bestimmten Zeit wiederholt, die größer oder gleich der Ringumlaufzeit und der Länge der beiden ersten Steuersignale aus den bereits dargelegten Gründen sein muß. In günstiger Ausgestaltung der erfindungsgemäßen Schaltungsanordnung wird das erreicht, indem das über die Empfangseinrichtung empfangene erste und folgende zweite der über die Sendeeinrichtung selbst ausgesendeten Steuersignale nach deren Ringumlauf über die Steuersignal-Wiederholschaltung jeweils für den erneuten Start der Signalgeber für das erste und zweite Steuersignal genutzt wird. Dadurch ist gesichert, daß nach erfolgtem Ringumlauf die sofortige erneute Aussendung der beiden Steuersignale erfolgt.

Das erfindungsgemäße Verfahren und die Schaltungsanordnung weisen gegenüber bekannten technischen Lösungen den Vorteil auf, daß die Steuersignale für den Mastertransfer oder Teile davon keiner Zwischenspeicherung, Auswertung und anschließender veränderter oder unveränderter Wiederaussendung durch die Teilnehmer bedürfen. Vielmehr durchläuft das erste Steuersignal, welches die Übertragung der Masterfunktion ankündigt, ohne Verzögerung alle Teilnehmer, und die sendewilligen Teilnehmer senden unabhängig davon, was sie empfangen, gleichzeitig ein drittes Steuersignal aus.

Die mit der Erfindung erreichte Dezentralisierung der Übertragung der Masterfunktion hat darüber hinaus Vorteile in bezug auf die zu sichernde Zuverlässigkeit solcher Systeme. Beispielsweise ist bei Ausfall eines Teilnehmers durch dessen einfache Überbrückung der Übertragungsring weiterhin funktionsfähig. Auch lassen sich leicht weitere gleichartige Teilnehmerstationen in den bereits arbeitenden Übertragungsring einfügen.

Die erfindungsgemäße Schaltungsanordnung weist außerdem den Vorzug auf, daß die Informationsverarbeitungseinheiten der Teilnehmer und damit deren Software von der Zugriffssteuerung befreit sind und daß die Übertragung der Masterfunktion durch jeden Teilnehmer mit einer relativ einfachen Hardware erreicht wird.

Im folgenden wird die Erfindung anhand der Zeichnung, die ein Ausführungsbeispiel darstellt, näher erläutert. Es zeigen:

Fig. 1 ein Mehrrechnersystem mit ringförmiger Struktur mit vier Teilnehmern,

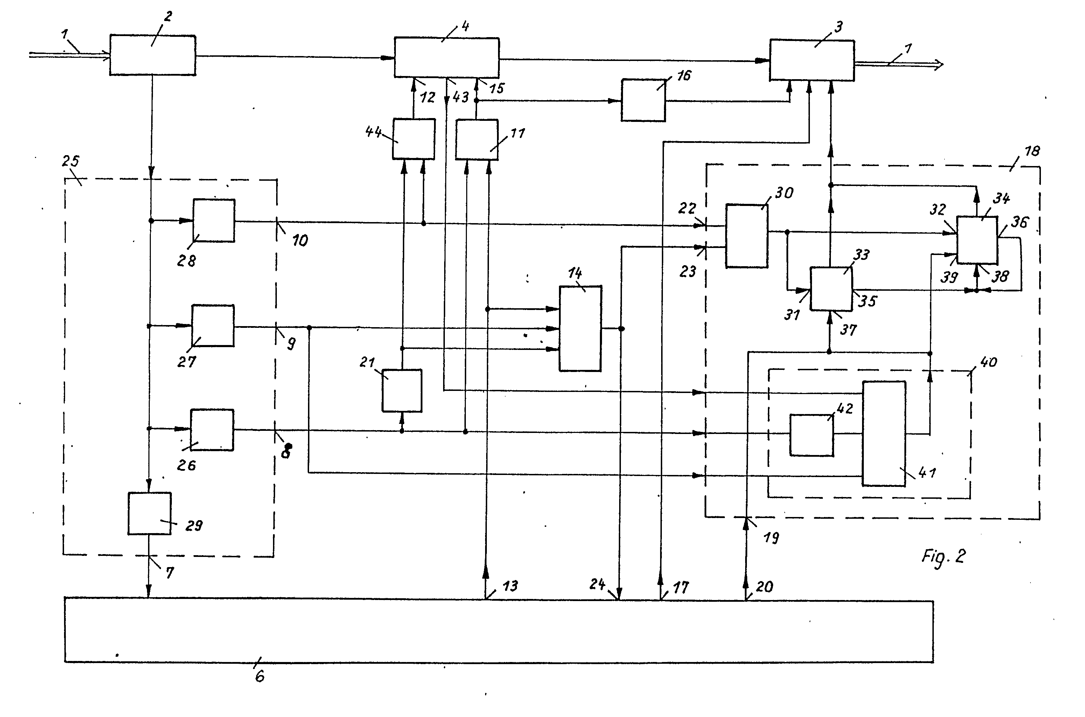

Fig. 2 ein Blockschaltbild der erfindungsgemäßen Schaltungsanordnung jeder Teilnehmerstation und

Fig. 3 das Schema des Signalablaufes der empfangenen Signale (E 1...4) und der gesendeten Signale (S 1...4) und der Schalterstellungen der Schalteinheiten (SW 1...4) während der Übertragung der Masterfunktion.

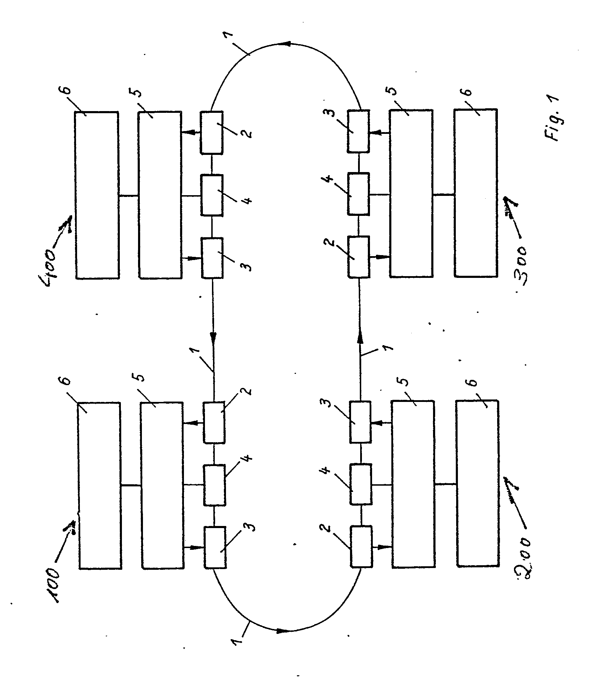

Das in Fig. 1 dargestellte ringförmig strukturierte Mehrrechnersystem mit vier über einen unidirektionalen Übertragungskanal miteinander verbundenen gleichberechtigten Teilnehmerstationer (kurz: Teilnehmer 100, 200, 300, 400) dient als Anwendungsbeispiel für die Erfindung, wobei eine Laufzeit zwischen direkt benachbarten Teilnehmern von jeweils einer Bit-Länge angenommen wird. (Die Numerierung der Teilnehmerstationen 100, 200, 300, 400 ist willkürlich gewählt.) Dabei wird anhand der Zeichnung die Realisierung des Mastertransfers von einem ersten Teilnehmer (z.B. 100) zu einem dritten Teilnehmer (z.B. 300) bei gleichzeitigem Sendewunsch eines weiteren Teilnehmers (z.B. 400) beschrieben. Drei den Mastertransfer bewirkende Steuersignale sind mit folgenden Bit-Kombinationen festgelegt:

    1. Steuersignal HHH

    2. Steuersignal LLL

    3. Steuersignal HLL

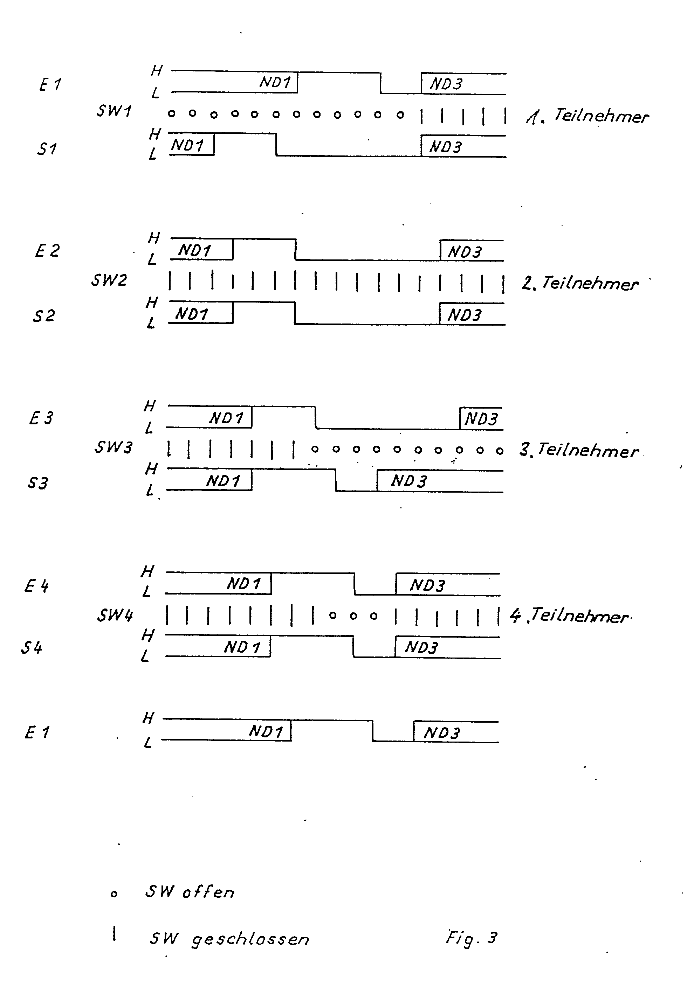

Während der Nutzdatenübertragung durch die aktuelle Masterstation (z.B. Teilnehmer 100) ist gemäß Fig. 3 die Schalteinrichtung (SW1) 4 des aktuellen Masters geöffnet, und die Schalteinrichtungen (SW2 bis SW4) 4 der anderen Teilnehmer (z.B. 200, 300, 400) sind geschlossen, so daß die über die Sendeeinrichtung (S1) 3 des aktuellen Masters 100 auf den Übertragungskanal 1 gesendeten Nutzdatentelegramme ND 1 alle Teilnehmer auf dem Ring durchlaufen und vom ersten Teilnehmer 100 über dessen Empfangseinrichtung 2 (E1) nach Ablauf der Ringumlaufzeit wieder empfangen werden.

Nach erfolgter Nutzdatenübertragung gibt die Informationsverarbeitungseinheit 6 des aktuellen Master-Teilnehmers 100 über ihren Ausgang 20 ein Signal ab, welches den Steuersignalgeber 33 über dessen Starteingang 37 startet. Unabhängig davon, daß die Empfangseinrichtung 2 noch Nutzdatentelegramme ND1 empfängt, wird somit unmittelbar nach dem Nutzdatentelegramm ND1 vom Teilnehmer 100 das erste Steuersignal gesendet, welches auf dem Übertragungsring wie die Nutzdatentelegramme zirkuliert.

Das erste Steuersignal wird von allen Teilnehmern empfangen, gelangt dort jeweils in den Demodulator 25 und erzeugt am Ausgang des Komparators 26 ein Signal, welches die erste Torschaltung 11 ansteuert. Es sei nun angenommen, daß bei den Teilnehmern 300 und 400 über deren Sendewunsch-Ausgänge 13 der Informationsverarbeitungseinheit 6 gleichzeitig ein Sendewunsch-Signal an der ersten Torschaltung 11 anliegt. Diese beiden Teilnehmer öffnen ihre Und-Tore und damit über die Signal-Eingänge 15 ihre Schalteinrichtungen 4. Auf diese Weise wird der Übertragungskanal in drei Punkt-zu-Punkt-Verbindungen zwischen den Teilnehmern 100 und 300, 300 und 400 sowie 400 und 100 aufgeteilt (die Schalteinrichtung des nicht sendewilligen Teilnehmers (im Beispiel 200) bleibt geschlossen).

Anschließend werden von Teilnehmer 100 zweite Steuersignale und von Teilnehmer 300 und 400 jeweils das dritte Steuersignal abgesendet. Das wird wie folgt erreicht:

erster Teilnehmer
100: Der Steuersignalgeber 33 erzeugt nach dem Aussenden des ersten Steuersignales am Ausgang 35 ein Ende-Signal, welches über den Starteingang 38 den Steuersignalgeber 34 startet, der anschließend das zweite Steuersignal sendet. Über den Ausgang 36 wird der Steuersignalgeber 34 ständig neu gestartet, wodurch weitere zweite Steuersignale über den Übertragungskanal 1 an die Empfangseinrichtung 2 des Teilnehmers 300 gelangen.

Teilnehmer
300 und 400: Das am Ausgang der ersten Torschaltung 11 anliegende Signal startet den Steuersignalgeber 16, der jeweils das dritte Steuersignal erzeugt.

Die von Teilnehmer 1 gesendeten zweiten Steuersignale werden vom Komparator 27 des Teilnehmers 300 identifiziert, wodurch die zweite Torschaltung 14 aktiviert und über den Eingang 24 der Informationsverarbeitungseinheit 6 der Befehl zum Beginn der Nutzdatenaussendung über ihren seriellen Nutzdatenausgang 17 erteilt wird. Gleichzeitig haben die Teilnehmer 400 und 100 jeweils das dritte Steuersignal empfangen und über die Komparatoren 28 und die Signaleingänge 12 ihre Schalteinrichtungen 4 geschlossen. Parallel dazu sind durch den Empfang des dritten Steuersignales die Stop-Eingänge 31, 32 der Steuersignalgeber 33, 34 aktiviert worden, wodurch Teilnehmer 100 die Aussendung dieser Signale sofort beendet. Entsprechend der mit 4-Bit-Längen bezifferten Umlaufzeit auf dem Übertragungsring wurde vom Teilnehmer 100 die Zeit bis zum Empfang der Nutzdatentelegramme ND3 vom Teilnehmer 300 (Fig. 3) mit der Aussendung der zweiten Steuersignale überbrückt.

Wenn im Übertragungsring kein sendewilliger Teilnehmer vorhanden ist, empfängt der aktuelle Master das erste und die folgenden zweiten Steuersignale nach deren Zirkulation selbst wieder. In diesem Fall muß die Aussendung der ersten beiden Steuersignale wiederholt werden, wobei die Zeitdauer t vom Beginn einer Aussendung bis zum Anfang der nächstfolgenden Aussendung größer oder gleich der Ringumlaufzeit und der Länge der beiden Signale sein muß, um ein gleichzeitiges Vorhandensein mehrerer erster Steuersignale auf dem Ring zu verhindern.

Das wird erreicht, indem die Steuersignal-Wiederholschaltung 40 nach Ablauf der Zeitdauer t die zyklische Aussendung von zweiten Steuersignalen über den zweiten Stop-Eingang 39 des Steuersignalgebers 34 beendet und gleichzeitig den Steuersignalgeber 33 über den Starteingang 37 neu startet. In vorteilhafter Weise wird dabei die Information für die Steuersignal-Wiederholschaltung 40 aus dem Empfang des ersten und des dem ersten folgenden zweiten Steuersignales nach deren Zirkulation auf dem Übertragungsring gewonnen. Dazu wird das Ausgangssignal des Komparators 26 mittels des Zeitgliedes 42 so verzögert, daß es gleichzeitig mit dem Ausgangssignal des Komparators 27 an der dritten Torschaltung 41 anliegt. Über die konjunktive Verknüpfung mit dem am Rückmeldeausgang 43 der Schalteinrichtung 4 liegenden Rückmeldesignal, welches bei geöffneter Schalteinrichtung 4 vorhanden ist, wird sichergestellt, daß nur im jeweils aktuellen Master über dessen Steuersignal-Wiederholschaltung 40 die Aussendung der ersten bei den Steuersignale wiederholt erfolgt. Nimmt nunmehr ein Teilnehmer das Senderecht wahr, so wird von diesem, wie oben beschrieben, ein drittes Steuersignal ausgesendet, welches über den ersten Stop-Eingang 22 und über die Stop-Eingänge 31 und 32 die zyklische Aussendung erster und zweiter Steuersignale beendet. Entsteht im aktuellen Master selbst ein erneuter Sendewunsch, so wird durch die Aktivierung der zweiten Torschaltung 14 über den zweiten Stop-Eingang 23 der Oder-Schaltung 30 ebenfalls die weitere Aussendung von ersten und zweiten Steuersignalen verhindert.

Eine günstige Auswahl der Bit-Kombinationen für die Steuersignale wird ermöglicht, indem die oben beschriebene Wirkung eines empfangenen zweiten oder dritten Steuersignals nur nach vorherigem Empfang eines ersten Steuersignals eintreten kann. Diese Abhängigkeit wird durch die UND-Verknüpfung des Ausgangssignales des Komparators 28 in der vierten Torschaltung 44 und des Ausgangssignales des Komparators 27 in der zweiten Torschaltung 14 mit jeweils dem durch das Zeitglied 21 entsprechend verzögerten Ausgangssignal des Komparators 26 erreicht. Damit ist bezüglich der Steuersignale lediglich die Bedingung zu erfüllen, daß die Bit-Kombination des ersten Steuersignales nicht in den Nutzdatentelegrammen auftreten darf, während die Bit-Kombinationen des zweiten und dritten Steuersignales jeweils frei wählbar sind, wodurch diese bis auf eine jeweils verschiedene Bit-Stelle verkürzt werden können.

## Ansprüche

1. Verfahren zur Übertragung der Masterfunktion in dezentralen Mehrrechnersystemen mit ringförmigem Übertragungskanal ,in denen -Teilnehmerstationen über einen unidirektionalen Übertragungskanal seriell miteinander verbunden sind und jeweils eine Empfangs-und eine Sendeeinrichtung sowie eine zwischen Empfangs-und Sendeeinrichtung im Wege des Übertragungskanals angeordnete,den Übertragungskanal unterbrechende und schließende Schalteinrichtung aufweisen, -der Übertragungskanal während der Nutzdatenübertragung nur die Schalteinrichtungen der jeweils aktuellen Masterstation unterbricht, -alle anderen Teilnehmerstationen während der Datenübertragung die empfangenen Signale sofort auf ihre Sendeeinrichtungen durchschalten und -die Übertragung der Masterfunktion durch von der jeweils aktuellen Masterstation gesendete Steuersignale veranlaßt wird,

dadurch gekennzeichnet, daß

-zur Übertragung der Masterfunktion drei verschiedene Steuersignale verwendet werden,

-ein erstes Steuersignal von der jeweils aktuellen Masterstation unmittelbar nach einem von dieser gesendeten Datentelegramm gesendet wird,

-alle Teilnehmerstationen mit Sendewunsch nach Empfang des ersten Steuersignals den Übertragungskanal durch Öffnen ihrer Schalteinrichtung unterbrechen,

-mit einem von der aktuellen Masterstation nach dem ersten Steuersignal ausgesendeten zweiten Steuersignal die Masterfunktion auf die in Senderichtung nächstfolgende sendewillige Teilnehmerstation übertragen wird,

-das dritte Steuersignal von allen sendewilligen Teilnehmerstationen nach Empfang des ersten Steuersignales gesendet wird und

-alle Teilnehmerstationen, die das dritte Steuersignal empfangen, ihre Schalteinrichtung schließen.

2. Verfahren nach Patentanspruch 1, dadurch gekennzeichnet, daß
die Zeitdauer des zweiten Steuersignales nicht größer als die Zeitdauer des dritten Steuersignales ist.

3. Verfahren nach Patentanspruch 1 und 2, dadurch gekennzeichnet, daß
das zweite Steuersignal von der aktuellen Masterstation während der Zirkulation der ersten beiden bzw. des ersten und dritten Steuersignales auf dem Übertragungsring ständig wiederholt ausgesendet wird.

4. Verfahren nach Patentanspruch 1 bis 3, dadurch gekennzeichnet, daß
die aktuelle Masterstation die Aussendung des ersten und des zweiten Steuersignales wiederholt, wenn keine sendewillige Teilnehmerstation vorhanden ist und daß die Zeitdauer zwischen zwei aufeinanderfolgenden Aussendungen mindestens gleich der Summe aller Laufzeiten auf dem Übertragungsring und der Dauer der beiden Signale gewählt wird.

5. Verfahren nach Patentanspruch 1 bis 4, dadurch gekennzeichnet, daß
das erste, zweite und dritte Steuersignal in drei Bit-Stellen binär codiert sind, wobei sich das zweite und dritte Steuersignal in der ersten Bit-Stelle unterscheiden.

6. Vorrichtung zur Durchführung des Verfahrens nach einem der Ansprüche 1 bis 5, wobei die Teilnehmerstationen (100, 200, 300, 400) jeweils eine Informationsverarbeitungseinheit (6) sowie eine Steuereinheit (5) zur Zugriffssteuerung auf den Übertragungskanal aufweisen, dadurch gekennzeichnet, daß
-die Empfangseinrichtung (2) mit einem Demodulator (25) verbunden ist, der einen Nutzdatenausgang (7) und einen ersten, zweiten und dritten Steuersignalausgang (8, 9, 10) aufweist, von denen der Nutzdatenausgang (7) mit der Informationsverarbeitungseinheit (6),

der erste Steuersignalausgang (8) mit einem ersten Eingang einer ersten Torschaltung (11),

der zweite Steuersignalausgang (9) mit einem ersten Eingang einer zweiten Torschaltung (14) und

der dritte Steuersignalausgang (10) mit einem Signaleingang (12) zum Schließen der Schalteinrichtung (4) und mit einem ersten Stop-Eingang (22) eines Steuersignalgebers (18) für das erste und zweite Steuersignal verbunden sind,

-ein Sendewunsch-Signalausgang (13) der Informationsverarbeitungseinheit (6) an einen zweiten Eingang der ersten Torschaltung (11) und an einen zweiten Eingang der zweiten Torschaltung (14) angeschlossen ist,

-ein Ausgang der erster Torschaltung (11) mit einem Signaleingang (15) zum Öffnen der Schalteinrichtung (4) und mit einem Starteingang eines Steuersignalgebers (16) für das dritte Steuersignal verbunden ist, welcher an einem ersten Eingang der Sendeeinrichtung (3) liegt,

-ein zweiter Eingang der Sendeeinrichtung (3) mit einem seriellen Nutzdatenausgang (17) der Informationsverarbeitungseinheit (6) und ein dritter Eingang der Sendeeinrichtung (3) mit einem Ausgang des Steuersignalgebers (18) für das erste und zweite Steuersignal verbunden sind, und ein Starteingang (19) des Steuersignalgebers (18) für das erste und zweite Steuersignal an einen Ausgang (20) der Informationsverar beitungseinheit (6) zur Ende-Signalisierung der Nutzdatenübertragung angeschlossen ist und

-ein Ausgang der zweiten Torschaltung (14) mit einem zweiten Stop-Eingang (23) des Steuersignalgebers (18) für das erste und zweite Steuersignal und mit einem Eingang (24) der Informationsverarbeitungseinheit (6) zur Signalisierung des Beginns der Nutzdatenübertragung verbunden ist.

7. Vorrichtung nach Patentanspruch 6, dadurch gekennzeichnet, daß der Demodulator (25) aus einem Nutzdatendemodulator (29) und aus drei parallel angeordneten Komparatoren (26, 27, 28) besteht, deren Ausgänge jeweils der Nutzdatenausgang (7) und der erste, zweite und dritte Steuersignalausgang (8, 9, 10) sind.

8. Vorrichtung nach Patentanspruch 6 und 7, dadurch gekennzeichnet, daß die beiden Stop-Eingänge (22, 23) des Steuersignalgebers (18) für das erste und zweite Steuersignal über eine Oder-Schaltung (30) miteinander verknüpft sind, daß die Stop-Eingänge (31, 32) des Signalgebers (33) für das zweite Steuersignal parallel am Ausgang der Oder-Schaltung (30) liegen, daß der Ausgang (20) der Informationsverarteitungseinheit (6) zur Ende-Signalisierung der Nutzdatenübertragung mit dem Start-Eingang (37) des Steuersignalgebers (33) für das erste Steuersignal und mit dem zweiten Stop-Eingang (39) des Steuersignalgebers (34) für das zweite Steuersignal verbunden ist, daß die beiden Ausgänge (35, 36) der Steuersignalgeber (33, 34) für das erste und für das zweite Steuersignal zur Ende-Signalisierung der Steuersignalaussendung am Start-Eingang (38) des Steuersignalgebers (34) für das zweite Steuersignal angeschlossen sind und daß der Start-Eingang (37) des Steuersignalgebers (33) für das erste Steuersignal außerdem mit einer Steuersignal-Wiederholschaltung (40) verbunden ist.

9. Vorrichtung nach Patentanspruch 8, dadurch gekennzeichnet, daß die Steuersignal-Wiederholschaltung (40) aus einer dritten Torschaltung (41) mit drei Eingängen und aus einem Zeitglied (42) besteht, wobei der Steuersignalausgang (8) des Demodulators (25) für das erste Steuersignal über das Zeitglied (42) mit dem ersten Eingang der Torschaltung (41), der Steuersignalausgang (9) des Demodulators (25) für das zweite Steuersignal mit dem zweiten Eingang der Torschaltung (41) und ein Rückmeldeausgang (43) der Schalteinrichtung (4) mit dem dritten Eingang der Torschaltung (41) verbunden sind.

10. Vorrichtung nach Patentanspruch 6 bis 9, dadurch gekennzeichnet, daß am ersten Steuersignalausgang (8) des Demodulators |25) ein Zeitglied (21) angeschlossen ist, dessen Ausgang an einem dritten Eingang der zweiten Torschaltung (14) und an einem zweiten Eingang einer vierten Torschaltung (44) liegt, die vor dem Signaleingang (12) zum Schließen der Schalteinrichtung (4) angeordnet ist.

Fig. 1

Fig. 2

Fig. 3